# EUROPÄISCHE PATENTSCHRIFT

(11) **EP 0 541 605 B1**
(45) Veröffentlichungstag und Bekanntmachung des Hinweises auf die Patenterteilung: **18.01.1995**
(21) Anmeldenummer: 91913344.7
(22) Anmeldetag: 25.07.1991
(51) Int. Cl.: C09K 7/06, C09K 7/02, B01F 17/00

(54) **VERWENDUNG OBERFLÄCHENAKTIVER ALPHA-SULFOFETTSÄURE-DI-SALZE IN WASSER- UND ÖL-BASIERTEN BOHRSPÜLUNGEN UND ANDEREN BOHRLOCHBEHANDLUNGSMITTELN**
USE OF SURFACE-ACTIVE $g(a)-SULFO FATTY-ACID DI-SALTS IN WATER-BASED AND OIL-BASED BORE-FLUSHING AGENTS AND OTHER BOREHOLE-TREATMENT FLUIDS
UTILISATION DE DISELS D'ACIDES GRAS ALPHA-SULFONIQUES TENSIO-ACTIFS DANS DES SOLUTIONS DE CURAGE ET D'AUTRES AGENTS DE TRAITEMENT DE PUITS DE FORAGE A BASE D'EAU ET D'HUILE

(30) Priorität: 03.08.1990 DE 4024659
(43) Veröffentlichungstag der Anmeldung: 19.05.1993
(73) Patentinhaber: Henkel Kommanditgesellschaft auf Aktien, 40191 Düsseldorf (DE)
(72) Erfinder: MÜLLER, Heinz, D-4019 Monheim (DE); HEROLD, Claus-Peter, D-4020 Mettmann (DE); FUES, Johann, Friedrich, D-4048 Grevenbroich (DE)
(86) Internationale Anmeldenummer: EP9101394
(87) Internationale Veröffentlichungsnummer: WO9202593

(56) Entgegenhaltungen:
- EP-A- 0 247 467
- EP-A- 0 374 672
- DE-A- 3 419 415
- US-A- 0 070 075
- US-A- 3 878 111

## Beschreibung

Die Erfindung betrifft die Verwendung ausgewählter Emulgatoren mit erhöhter ökologischer Verträglichkeit für die Herstellung von fließfähigen dispersen Systemen, die entweder als W/O-Invert-Emulsionen mit geschlossener Ölphase oder als wäßrige Emulsionen mit disperser Ölphase vorliegen und für den technischen Einsatz im Rahmen von fließfähigen Bohrlochbehandlungsmitteln geeignet sind. Als charakteristisches Beispiel für Mittel dieser Art wird im nachfolgenden die Erfindung anhand von Öl-basierten bzw. Wasser-basierten Bohrspülflüssigkeiten und darauf aufgebauten Bohrspülschlämmen beschrieben. Das Anwendungsgebiet der erfindungsgemäßen Abwandlung von Hilfsflüssigkeiten der hier betroffenen Art ist jedoch nicht darauf beschränkt. In Betracht kommen insbesondere auch die Gebiete der Spotting Fluids, Spacer, Hilfsflüssigkeiten für Workover und Stimulierung und für das Fracturing.

Die Erfindung geht dabei insbesondere von der Aufgabe aus, die ökologische Verträglichkeit dieser heute weltweit in großtechnischem Einsatz befindlichen Hilfsmittel dadurch substantiell zu beeinflussen, daß ausgewählte und insbesondere ökologisch unbedenkliche Emulgatortypen zum Einsatz kommen. Die Erfindung will in ihrer bevorzugten Ausführungsform diese biologisch unbedenklichen Emulgatoren gleichzeitig mit Öl-phasen erhöhter Umweltverträglichkeit und insbesondere biologischer Abbaubarkeit verwenden.

Auf dem Gebiet flüssiger Spülsysteme zur Niederbringung von Gesteinsbohrungen unter Aufbringen des abgelösten Bohrkleins haben heute die sogenannten Invert-Bohrspülschlämme hervorragende Bedeutung, die auf der Basis von W/O-Emulsionen eine disperse wäßrige Phase in der geschlossenen Ölphase enthalten. Der Gehalt an disperser wäßriger Phase liegt üblicherweise im Bereich von etwa 5 bis 50 Gew.-%.

Bekannt sind aber auch Wasser-basierte Bohrspülungen mit einer emulgierten dispersen Ölphase (O/W-Typ), deren Ölgehalt von einigen Prozent bis etwa 50 Gew.-% reichen kann. O/W-Emulsionsspülungen dieser Art zeigen eine Reihe beträchtlicher Vorteile gegenüber rein Wasserbasierten Spülungstypen.

Zur Stabilisierung der jeweils gewählten Dispersionsform bedarf es des Einsatzes entsprechender Emulgatoren entweder vom W/O-Typ (Invert-Spülungen) bzw. vom O/W-Typ (Emulsionsspülungen). Zur einschlägigen Fachliteratur wird beispielsweise verwiesen auf G. R. Gray, H.C.H. Darley "Composition in Properties of Oil Well Drilling Fluids" 4. Auflage, Gulf Publishing Co., Houston London, 1981 insbesondere Seiten 51, 64 und 320 ff.

Die Ölphasen von Bohrspülungen der hier geschilderten Art und vergleichsweise aufgebauten anderen Bohrlochbehandlungsmitteln werden in der Praxis heute nahezu ausschließlich durch Mineralölfraktionen gebildet. Damit ist eine nicht unbeträchtliche Belastung der Umwelt verbunden, wenn beispielsweise die Bohrschlämme unmittelbar oder über das erbohrte Gestein in die Umwelt gelangen. Mineralöle sind nur schwer und anaerob praktisch nicht abbaubar und damit als langfristige Verschmutzung anzusehen. Wenn diese Ölphasen auch als der Hauptbestandteil oder wenigstens substantieller Anteil der Bohrspülung für ökologische Überlegungen ein wichtiger Ansatzpunkt sind, so muß doch auch den anderen Komponenten solcher Mehrstoffgemische entsprechende Aufmerksamkeit gewidmet werden. Besondere Bedeutung kommt hier den Emulgatoren zu. Bestimmungsgemäß sind Verbindungen dieser Art schon in geringer Konzentration hochaktive Wirkstoffe, die bekanntlich zur intensiven Interaktion mit dem pflanzlichen oder tierischen Organismus befähigt sind.

Die vorliegende Erfindung geht von der Aufgabe aus, Arbeitsmittel der beschriebenen Art auf Basis von geschlossenen oder dispersen Ölphasen in Abmischung mit wäßrigen Phasen unter Berücksichtigung ihrer ökologischen Verträglichkeit substantiell gegenüber heute üblichen Arbeitsmitteln dieser Art zu verbessern. Die Erfindung will dabei insbesondere für das hier betroffene Einsatzgebiet Emulgatoren bzw. Emulgatorkomponenten vorschlagen, die an sich bekannt und dabei als in hohem Maße umweltverträglich beschrieben sind, für das hier betroffene Arbeitsgebiet aber noch keine Verwendung gefunden haben. In der bevorzugten Ausgestaltung der Erfindung sollen diese umweltverträglichen Emulgatoren vom W/O-Typ bzw. vom O/W-Typ zusammen mit Öl/Wasser-Phasen zum Einsatz kommen, in denen die Ölphasen ihrerseits erhöhte ökologische Verträglichkeit besitzen und insbesondere durch natürliche Abbaumechanismen umweltschonend abgebaut werden können.

Zur Lösung der ersten Teilaufgabe schlägt die Erfindung vor, als ökologisch verträgliche bzw. unbedenkliche Verbindungen mit Emulgatorwirkung an sich bekannte oberflächenaktive Alpha-Sulfofettsäure-Di-Salze einzusetzen, die bekanntlich je nach ihrer Konstitution und der Interaktion mit dem umgebenden System als W/O-Emulgatoren oder als O/W-Emulgatoren einzustufen sind. Der Einfachheit halber werden diese Emulgatoren nachfolgend kurz "Di-Salze" genannt.

Gegenstand der Erfindung ist dementsprechend in einer ersten Ausführungsform die Verwendung oberflächenaktiver Di-Salze vom als ökologisch verträgliche Emulgatoren W/O-Typ und/oder O/W-Typ in fließ- und pumpfähigen Bohrspülungen oder anderen fließfähigen Bohrlochbehandlungsmitteln, die zusammen mit einer wäßrigen Phase eine geschlossene oder disperse Ölphase aufweisen und für die umweltschonende Erschließung biologischer Lagerstätten, beispielsweise von Erdöl- bzw. Erdgasvorkommen geeignet sind.

Besondere Bedeutung haben in diesem Zusammenhang entsprechende Invert-Bohrspülungen, die in einer geschlossenen Ölphase eine disperse wäßrige Phase zusammen mit Emulgatoren übliche weitere Hilfsstoffe, wie Verdickungsmittel, fluid-loss-Additive, Beschwerungsmittel, lösliche Salze und/oder Alkalireserven enthalten. Erfindungsgemäß ist in dieser Ausführungsform der Einsatz von oberflächenaktiven Di-Salzen vom W/O-Typ als Emulgator oder wenigstens Bestandteil eines ökologisch verträglichen Emulgatorsystems vorgesehen.

Bevorzugt werden dabei diese Emulgatoren auf Basis oberflächenaktiver Di-Salze zusammen mit umweltverträglichen Esterölen, oleophilen Alkoholen und/oder entsprechenden Ethern als geschlossene bzw. disperse Öl-phase eingesetzt. Zu verweisen ist hier insbesondere auf einschlägige Entwicklungen der Anmelderin, die in einer größeren Zahl älterer Patentanmeldungen Vorschläge zum Austausch der bisher üblichen Mineralölfraktionen gegen ökologisch verträgliche leicht abbaubare Ölphasen beschreibt. Dabei werden unterschiedliche Typen von Austauschölen dargestellt, die auch in Mischung miteinander eingesetzt werden können. Es handelt sich hierbei um ausgewählte oleophile Monocarbonsäureester, ausgewählte Polycarbonsäureester, um wenigstens weitgehend wasserunlösliche und unter Arbeitsbedingungen fließfähige Alkohole, um entsprechende Ether sowie um ausgewählte Kohlensäureester. Summarisch wird hier verwiesen auf die älteren Anmeldungen P 38 42 659.5 (D 8523), P 38 42 703.6 (D 8524), P 39 07 391.2 (D 8506), P 39 07 392.0 (D 8607), P 39 03 785.1 (D 8543), P 39 03 784.3 (D 8549), P 39 11 238.1 (D 8511), P 39 11 299.3 (D 8539), P 40 18 228.2 (D 9167) und P 40 19 266.0 (D 9185). Alle hier genannten älteren Anmeldungen betreffen das Gebiet Öl-basierter Bohrspülsysteme, insbesondere vom W/O-Inverttyp. Wasserbasierte Emulsionsspülungen unter Verwendung von diesen Ölphasen erhöhter Abbaubarkeit werden beschrieben in den älteren Anmeldungen P 39 15 876.4 (D 8704), P 39 15 875.6 (D 8705), P 39 16 550.7 (D 8714) und den bereits genannten Anmeldungen P 40 18 228.2 (D 9167) und P 40 19 266.0 (D 9185).

In ihrer wichtigstens Ausführungsform erfaßt die Erfindung die gemeinsame Verwendung der zuvor geschilderten Emulgatoren aus der Klasse der oberflächenaktiven Di-Salze zusammen mit dispersen oder geschlossenen Ölphasen der zuletzt geschildert Art. Die Offenbarung der genannten älteren Anmeldungen wird hiermit ausdrücklich zum Gegenstand der Erfindungsoffenbarung gemacht.

Oberflächenaktive Di-Salze und ihre Herstellung sind im Stand der Technik ausführlich beschrieben, wobei allerdings bisher das Schwergewicht für ihren Einsatz als O/W-Emulgatoren - beispielsweise im Zusammenhang mit Wasch- und Reinigungsmitteln - gelegt wird. Verwiesen wird in diesem Zusammenhang auf die Veröffentlichung von Stein und Baumann "alpha-Sulfonated Fatty Acids and Esters: Manufacturing Process, Properties and Applications" J. Am. Oil Chem. Soc. 1975, 52, 323 bis 329 und die darin zitierte Primärliteratur. Schon hier wird auf die guten Öko-toxikologischen Eigenschaften von Alpha-Di-Salz verwiesen, wobei herausgestellt sind die hohe biologische Abbaubarkeit, die geringe akute orale Toxizität und die gute Hautverträglichkeit. Aus der neueren Literatur zu dieser Verbindungsklasse seien benannt die EP-A2 0 302 402 und 0 302 403, in denen sich Angaben über die akute aquatische Toxizität der Natrium-Di-Salze, bestimmt an Goldorphen und Daphnien, finden. Empfohlen werden die Di-Salze in diesen zuletzt genannten Druckschriften für den Einsatz in Wasch- und Reinigungsmitteln mit verbesserter Ökoverträglichkeit für die Textilwäsche. Aus dem umfangreichen druckschriftlichen Stand der Technik zur Herstellung solcher Di-Salze sei herausgegriffen die US-PS 1,926,442, die Veröffentlichung von A. J. Stirton "alpha-Sulfo Fatty Acids and Derivatives, Synthesis, Properties and Use" in J. Am. Oil Chem. Soc. 1962, 39, 490 bis 496 und die dort zitierte Literatur. Bekannt ist insbesondere auch die Sulfierung von Fettsäuren mit einem Unterschuß des Sulfierungsmittels - üblicherweise auf Basis SO₃ - wobei Gemische von Di-Salz und Seife anfallen, siehe hierzu beispielsweise die GB-PS 1 338 935.

Bekannt ist weiterhin, daß bezüglich der Löslichkeit solcher Di-Salze Unterschiede bestehen zwischen den mit 1wertigen Kationen, insbesondere mit Alkalimetallsalzen gebildeten Seifen einerseits und den mit mehrwertigen Kationen gebildeten Seifen, wobei hier insbesondere die Erdalkalimetalle und/oder Aluminium und dabei vor allem Calcium als kationischer Salzbildner in Betracht kommen. Die Di-Salze solcher mehrwertiger Kationen sind gegenüber den Natrium-Di-Salzen vergleichsweise schwerlöslich. Durch Zusatz von Calciumionen und auch Magnesiumionen zu einer wäßrigen Lösung der Natrium-Di-Salze werden die entsprechenden Di-Salze der Erdalkalimetalle ausgefällt. Ausgenutzt wird diese bekannte Fällungsreaktion beispielsweise auf dem Gebiet der textilen Wasch- und Reinigungsmittel, wo lösliche Di-Salz-Verbindungen als Builderkomponenten zum Abfangen der Calciumionen aus der Waschflotte verwendet werden, vergleiche hierzu beispielsweise EP-B1 0 070 190 und 0 070 191.

Keiner dieser Vorschläge aus dem Stand der Technik gibt Hinweise auf die besondere Brauchbarkeit von Alpha-Sulfofettsäure-Di-Salzen sowohl in ihrer löslichen Ausführungsform (insbesondere Alkali-Di-Salze) als auch gerade in ihren vergleichsweise unlöslichen Ausführungsformen (Di-Salze mehrwertiger Ionen, insbesondere des Calciums und/oder des Magnesiums) als O/W-Emulgatoren bzw. W/O-Emulgatoren in Wasser und Öl enthaltenden Mischphasen der hier betroffenen Art und des hier betroffenen Anwendungszweckes. Erstaunlich ist das insbesondere auf dem Hintergrund des an sich bekannten Wissens, entsprechende nichtsulfonierte Fettsäureseifen - beispielsweise entsprechenden Natriumseifen oder die vergleichsweise die schwerlöslichen Calciumseifen von höheren Fettsäuren - als Emulgatoren bzw. Emulgatorbestandteil in beispielsweise Bohrspülungssystemen einzusetzen.

Die Erfindung macht wie angegeben gezielt Gebrauch von diesen an sich bekannten löslichen oder schwerlöslichen Salzen von Alpha-Sulfofettsäuren (Di-Salze) und ermöglicht damit beispielsweise die nachhaltige Stabilisierung von Öl-basierten W/O-Invert-Emulsionen unter Verzicht auf die heute in weitem Umfang üblichen N-haltigen Emulgatorsysteme, deren Verträglichkeit gerade im besonders empfindlichen marinen Ökosystem nicht unumstritten ist.

Die jetzt für den erfindungsgemäßen Einsatzzweck zu verwendenden Di-Salze können durch die nachfolgende allgemeine Formel (I) charakterisiert werden

R-CH(SO₃M)-CO₂M (I)

wobei in dieser Formel R die nachfolgende Bedeutung hat:
Lineares und/oder verzweigtes Alkyl, das gesättigt und/oder olefinisch ungesättigt sein kann, vorzugsweise jedoch wenigstens überwiegend gesättigt ist und wenigstens 4 C-Atome im Rest R aufweist. Bevorzugt sind entsprechende Reste R mit 6 bis 22 C-Atomen.

M steht für gleiche oder verschiedene Kationen aus der Gruppe Alkali, Erdalkali (M/2) und/oder Aluminium (M/3).

Als Einsatzmaterialien für die Gewinnung der oberflächenaktiven Di-Salze eignen sich natürliche und/oder synthetische Fettsäuren, die lineare Struktur haben und/oder verzweigt sind. Besondere Bedeutung wegen ihrer leichten Zugänglichkeit kommt hier den entsprechenden Fettsäuren natürlichen Ursprungs zu, wobei es sich hier im allgemeinen um Mischungen homologer Säuren eines vorgegebenen C-Zahlbereiches handelt, der durch das jeweilige Einsatzmaterial bestimmt ist. Die der Alpha-Sulfonierung zu unterwerfenden Carbonsäuren bzw. Carbonsäuregemische sind zweckmäßigerweise wenigstens weitgehend gesättigter Natur, wenn auch die Mitverwendung ungesättigter Komponenten nicht ausgeschlossen ist. Bei diesen ungesättigten Anteilen tritt dann in der Regel zusätzlich eine Ketten-innenständige Sulfierung ein.

Besondere praktische Bedeutung haben Alpha-sulfonierte Carbonsäuren des Bereichs von wenigstens 6 C-Atomen (R in der allgemeinen Formel (I) = 4), wobei dem Bereich der Fettsäuren bzw. Fettsäuregemische von C₈ bis C₂₄ besondere praktische Bedeutung zukommt. Di-Salze, die wenigstens anteilsweise oder vorzugsweise überwiegend Fettsäurereste mit 10 und mehr C-Atomen, vorzugsweise mit wenigstens 12 bis 14 C-Atomen aufweisen, sind bevorzugte Einsatzmaterialien für die erfindungsgemäß zu verwendenden Emulgatorkomponenten. Fettsäurereste mit 16 bis 18 C-Atomen und insbesondere entsprechende gesättigte alpha-sulfonierte Fettsäuresalze können sowohl aus technischen wie aus ökonomischen Gründen besondere Bedeutung haben. Ausgangsmaterialien für die Gewinnung zahlreicher in diese Unterklassen fallenden Monocarbonsäuren, insbesondere hoherer Kohlenstoffzahl, sind pflanzliche und/oder tierische Öle bzw. Fette, die bekanntlich im Normalfall als Triglyceride der Säuren bzw. Säuregemische anfallen. Genannt seien als Einsatzmaterialien für Fettsäuren natürlichen Ursprungs Kokosöl, Palmkernöl und/oder Babassuöl sowie Fette bzw. Talge tierischen Ursprungs, insbesondere als Einsatzmaterialien für die Gewinnung von Monocarbonsäuren des überwiegenden Bereichs bis C₁₈ und dabei von im wesentlichen gesättigten Komponenten. Esteröle pflanzlichen Ursprungs auf Basis olefinisch 1- und gegebenenfalls mehrfach ungesättigter Carbonsäuren des Bereichs von C₁₆₋₂₄ sind beispielsweise Palmkernöl, Erdnußöl, Rizinusöl, Sonnenblumenöl und insbesondere Rüböl. Fettsäuren dieser Art bedürfen zur selektiven Alpha-Sulfonierung üblicherweise zunächst einer Hydrierung. Aber auch auf synthetischem Weg gewonnene geradkettige und/oder verzweigte Carbonsäuren, die beispielsweise durch Oxidation aus primär gewonnenen Synthesealkoholen von der Art der Oxoalkohole und/oder Ziegleralkohole herstellbar sind, sind für die Gewinnung der Di-Salze und damit für deren Einsatz im Sinne des erfindungsgemäßen Handelns als Emulgatoren für insbesondere Bohrspülungen brauchbare Komponenten.

Di-Salze der durch die Erfindung betroffenen Art fallen bei ihrer Synthese im praktischen Verfahren in der Regel als Alkalisalz und dabei insbesondere in der Form der Natrium-Di-Salze an. Die erfindungsgemäß besonders wichtigen Di-Salze mehrwertiger Kationen und insbesondere die entsprechenden Erdalkali-Di-Salze können aus der freien Säure und/oder durch an sich bekannte Umsetzung der Natriumsalze mit entsprechenden Erdalkaliverbindungen, insbesondere löslichen Erdalkalisalzen, gewonnen werden. Dabei ist es möglich, die entsprechenden Di-Salze mehrwertiger Kationen in getrennter Reaktion herzustellen und als vorgebildete schwerlösliche Di-Salze beispielsweise im Bohrschlamm einzusetzen. Es hat sich allerdings als besonders vorteilhaft erwiesen, die Möglichkeit der in-situ-Ausbildung solcher Di-Salze mehrwertiger Kationen auszunutzen. An dem nachfolgenden Beispiel sei das verdeutlicht:

Die wäßrige disperse Phase in Öl-basierten Bohrspülungen vom Invert-Typ ist im allgemeinen im praktischen Einsatz mit gelösten Salzen, insbesondere Calciumsalzen wie Calciumchlorid, beladen. Werden solche gelöste Erdalkalisalze enthaltenden wäßrigen Phasen beim Aufbau der Invert-Emulsion verwendet, so entstehen durch in-situ-Ausfällung die entsprechenden Erdalkalisalze der alpha-sulfonierten Fettsäuren auch dann, wenn diese Emulgatorkomponenten zunächst in der Form ihrer Natriumsalze eingesetzt werden. Auf diese Weise ist nicht nur eine besonders ökonomische Verwirklichung der erfindungsgemäßen Lehre möglich, es hat sich gezeigt, daß durch eine solche in-situ-Bildung der insbesondere als W/O-Emulgatoren-wirksamen Erdalkali-Di-Salze rheologisch hochstabile Invert-Emulsionen zugänglich sind. Gerade in dem hier dargestellten Fall einer solchen Salzaustauschreaktion wird ersichtlich, daß auch den Kalium-Di-Salzen als Einsatzmaterial besondere Bedeutung zukommen kann: Bei der Umsalzung im zuletzt beschriebenen Sinne entsteht neben den als W/O-Emulgatoren-wirksamen Calcium-Di-Salzen das Kaliumchlorid, das in die wäßrige disperse Phase übergeht und hier ein bekannter bevorzugter Bestandteil zur Inhibierung wasserquellbarer Tone im Rahmen der Erschließung geologischer Vorkommen ist.

Die Emulgatoren auf Di-Salzbasis werden in einer bevorzugten Ausführungsform als die wesentlichen Emulsionstyp-bildenden und Emulsionsstabilisierenden Komponenten eingesetzt. Die erfindungsgemäße Lehre erfaßt allerdings auch Mischsysteme, in denen Di-Salze mit anderen Emulgatorkomponenten zum Einsatz kommen. Bevorzugt sind diese andere Emulgatorkomponenten ihrerseits ökologisch verträglich, verwiesen sei in diesem Zusammenhang beispielsweise auf die ältere Anmeldung P 40 03 028.8 (D 8158) der Anmelderin, in der ausgewählte Emulgatoren auf Etherbasis für Öl-basierte Invert-Emulsionen beschrieben sind. Ein anderes Beispiel für geeignete Co-Emulgatoren sind die in der parallelen Patentanmeldung ... (D 9223) beschriebenen oberflächenaktiven Alkylglycosidverbindungen.

Besonders geeignete Co-Emulgatoren können Salze - insbesondere entsprechende Salze - von Fettsäuren natürlichen und/oder synthetischen Ursprungs sein. In wirtschaftlicher Weise werden entsprechende Emulgatorgemische etwa im Sinne der eingangs zitierten GB-PS 1 338 935 durch eine nur anteilsweise Umsetzung des Fettsäureausgangsmaterials zum alpha-sulfonierten Reaktionsprodukt erhalten. Die Erfindung umfaßt aber auch die Zumischung beliebiger Fettsäuren bzw. Fettsäuresalze als Co-Emulgator zu den jeweiligen Wirkstoffmischungen, wobei sich hier insbesondere auch die Mitverwendung ungesättigter, geradkettiger und/oder verzweigter Fettsäuren als problemlos erweist.

Werden solche Emulgatorengemische eingesetzt, dann bilden in bevorzugten Ausführungsformen der Erfindung die Di-Salze wenigstens etwa 10 Gew.-%, vorzugsweise wenigstens etwa 50 Gew.-% des jeweiligen Emulgatorsystems.

Die Di-Salze können in Mengen von etwa 0,1 bis 10 Gew.-%, bezogen auf die Summe der Flüssigphasen Wasser und Öl, Verwendung finden. Bevorzugte Mengen liegen im Bereich von etwa 0,5 bis 5 Gew.-% der Emulgatorkomponente, wobei dem Bereich von etwa 1 bis 3 Gew.-% des Emulgators - wiederum bezogen auf die Summe von Wasser + Öl - besondere Bedeutung zukommt.

Eine wichtige Erleichterung für die wirtschaftliche Herstellung der erfindungsgemäßen Emulgatoren liegt im Verzicht auf die Bleiche der primär anfallenden Reaktionsprodukte, die nach dem druckschriftlichen Stand der Technik zur Herstellung dieser Emulgatorklasse als wesentlicher Verfahrensschritt angesehen wird. Das Herstellungsverfahren für Di-Salze enthaltende Wirkstoffgemische im erfindungsgemäßen Sinne kann sich dementsprechend auf die Verfahrensstufe der Sulfonierung und Salzbildung einschränken. Das Reaktionsrohprodukt kann unmittelbar der technischen Verwertung zugeführt werden.

In der eingangs besonders herausgestellten bevorzugten Ausführungsform werden die jeweiligen Ölphasen durch die in den zitierten älteren Anmeldungen der Anmelderin beschriebenen ökologisch verträglichen Esteröle, oleophilen Alkohole und/oder Ether gebildet. Unter Einsatz dieser Mittel betrifft die Erfindung dann die im Temperaturbereich von 5 bis 20 °C fließ- und pumpfähigen Bohrlochbehandlungsmittel, insbesondere Bohrspülungen auf Basis
- entweder einer geschlossenen Ölphase, insbesondere in Abmischung mit einer dispersen wäßrigen Phase (W/O-Inverttyp)
- oder einer dispersen Ölphase in einer geschlossenen wäßrigen Phase (O/W-Emulsionstyp)
Die ökologisch verträglichen Öle bzw. Ölphasen decken bezüglich ihrer möglichen physikalischen Beschaffenheit einen breiten Bereich ab. Die Erfindung umfaßt einerseits Ölphasen, die auch bei niederen Temperaturen fließ- und pumpfähig sind. Hier liegen insbesondere Vertreter, die für die Herstellung von W/O-Emulsionen geeignet sind. Aber auch hochviskose bis feste Ölphasen bzw. Materialien dieser Art können im Rahmen der erfindungsgemäßen Lehre mitverwendet werden. Beispielhaft sind hier die folgenden Überlegungen:

Für Wasser-basierte O/W-Emulsionsspülungen ist eine hohe Beweglichkeit der dispersen Ölphase nicht erforderlich, gegebenenfalls sogar nicht einmal erwünscht. Beispielsweise zur Sicherstellung guter Schmiereigenschaften können vergleichsweise viskos eingestellte Ölphasen vorteilhaft sein. Eine andere Möglichkeit des Einsatzes hochviskoser oder gar fester ökologisch verträglicher Ölphasen ist dann gegeben, wenn die jeweils im Fertigprodukt betroffene Ölphase nur anteilsweise aus diesen hochviskosen bis festen Vertretern abbaubarer Ester, Alkohole und/oder Ether gebildet wird, die ihrerseits in Abmischung mit vergleichsweise dünnflüssigen Ölen dieser Art vermischt sind.

Einheitlich gilt allerdings für alle erfindungsgemäß zu verwendenden Ölphasen bzw. Ölmischphasen, daß Flammpunkte von wenigstens etwa 100 °C und vorzugsweise Flammpunkte oberhalb etwa 135 °C aus Sicherheitsgründen im Betrieb gefordert werden. Deutlich darüberliegende Werte, insbesondere solche oberhalb 150 °C können besonders zweckmäßig sein. Einheitlich gilt weiterhin für die verschiedenen potentiell Hydrolyse-gefährdeten Ölphasen, die im erfindungsgemäßen Rahmen eingesetzt werden können, daß das Erfordernis der ökologischen Verträglichkeit nicht nur für die Einsatzverbindung, also beispielsweise das jeweils gewählte Esteröl oder Gemisch von Esterölen erfüllt ist, sondern daß auch bei einer partiellen Verseifung im praktischen Einsatz keine toxikologischen und insbesondere keine inhalations-toxikologischen Gefährdungen ausgelöst werden. Es ist im Rahmen der genannten älteren Anmeldungen ausführlich geschildert, daß hier insbesondere die verschiedenen Vertreter der Esteröle angesprochen sind, wobei hier wiederum monofunktionellen Alkoholen aus der Esterbildung besondere Bedeutung zukommt. Monofunktionelle Alkohole sind im Vergleich zu polyfunktionellen Alkoholen in ihren niederen Gliedern hochflüchtig, so daß durch eine Partialhydrolyse hier sekundäre Gefährdungen auftreten könnten. Bevorzugt sind dementsprechend in den Klassen der verschiedenen Esteröle mitverwendete monofunktionelle Alkohole bzw. die entsprechenden Reste dieser Alkohole so gewählt, daß sie im Molekül wenigstens 6 C-Atome, vorzugsweise wenigstens 8 C-Atome besitzen.

Für Invert-Bohrspülungen der erfindungsgemäß betroffenen Art gilt unabhängig von der bestimmten Beschaffenheit der geschlossenen Ölphase, daß sie in bevorzugten Ausführungsformen eine Plastische Viskosität (PV) im Bereich von etwa 10 bis 60 mPas und eine Fließgrenze (Yield Point YP) im Bereich von 5 bis 40 lb/100 ft² - jeweils bestimmt bei 50 °C - aufweisen.

Als ökologisch verträgliche und bei niederen Temperaturen gut fließfähige Ölphase haben sich insbesondere Esteröle von Monocarbonsäuren erwiesen, die dann in einer bevorzugten Ausführungsform der Erfindung sich aus wenigstens einer der nachfolgenden Unterklassen ableiten:
a) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und 1- und/oder mehrfunktionellen Alkoholen der unter a) genannten Art,
c) Ester olefinisch 1- und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

Ausgangsmaterialien für die Gewinnung zahlreicher in diese Unterklassen fallenden Monocarbonsäuren, insbesondere höherer Kohlenstoffzahl, sind pflanzliche und/oder tierische Öle. Genannt seien Kokosöl, Palmkernöl und/oder Babassuöl, insbesondere als Einsatzmaterialien für die Gewinnung von Monocarbonsäuren des überwiegenden Bereichs bis C₁₈ und von im wesentlichen gesättigten Komponenten. Pflanzliche Esteröle, insbesondere für olefinisch 1- und gegebenenfalls mehrfach ungesättigte Carbonsäuren des Bereichs von C₁₆₋₂₄ sind beispielsweise Palmöl, Erdnußöl, Rizinusöl, Sonnenblumenöl und insbesondere Rüböl. Aber auch synthetisch gewonnene Komponenten sind sowohl auf der Carbonsäureseite als auf der Seite der Alkohole wichtige Strukturelemente für ökologisch verträgliche Ölphasen.

### Additive in der Öl-basierten bzw. Wasser-basierten Spülung

Invert-Bohrspülschlämme enthalten üblicherweise zusammen mit der geschlossenen Ölphase die feindisperse wäßrige Phase in Mengen von etwa 5 bis 50 Gew.-%. In Wasser-basierten Emulsonsspülungen liegt die disperse Ölphase üblicherweise in Mengen von wenigstens etwa 1 bis 2 Gew.-%, häufig in Mengen von wenigstens etwa 5 Gew.-% bei einer Obergrenze des Ölanteils von etwa 40 bis 50 Gew.-% vor - Gew.-% jeweils bezogen auf die Summe der unbeschwerten Flüssiganteile Öl/Wasser.

Neben dem Wassergehalt kommen alle für vergleichbare Spülungstypen vorgesehenen Additive in Betracht. Diese Additive können wasserlöslich, öllöslich und/oder wasser- bzw. öldispergierbar sein. Übliche Additive sind neben den erfindungsgemäß definierten Emulgatoren beispielsweise fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B Wasser-quellbare Tone und/oder Salzschichten und der z. B. Wasser-basierten Spülflüssigkeit, Netzmittel zum besseren Aufziehen der emulgierten Ölphase auf Feststoffoberflächen, z. B. zur Verbesserung der Schmierwirkung, aber auch zur Verbesserung des oleophilen Verschlusses freigelegter Gesteinsformationen, bzw. Gesteinsflächen, Biocide, beispielsweise zur Hemmung des bakteriellen Befalls von O/W-Emulsionen und dergleichen. Im einzelnen ist hier auf den einschlägigen Stand der Technik zu verweisen, wie er beispielsweise in der eingangs zitierten Fachliteratur ausführlich beschrieben wird, siehe hierzu insbesondere Gray und Darley, aao., Kapitel 11, "Drilling Fluid Components". Nur auszugsweise sei dementsprechend zitiert:

Feindisperse Zusatzstoffe zur Eröhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Xanthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation.

Verdünner zur Viskositätsregulierung: Die sogenannten Verdünner können organischer oder anorganischer Natur sein, Beispiele für organische Verdünner sind Tannine und/oder Quebracho-Extrakt. Weitere Beispiele hierfür sind Lignit und Lignitderivate, insbesondere Lignosulfonate. Wie zuvor allerdings angegeben, wird in einer bevorzugten Ausführungsform der Erfindung auf die Mitverwendung toxischer Komponenten gerade hier verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen.

Den unerwünschten Wasseraustausch mit beispielsweise Tonen inhibierende Zusatzstoffe: In Betracht kommen hier die aus dem Stand der Technik zu öl- und wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann.

Verwiesen sei beispielsweise auf die entsprechenden Veröffentlichungen in "Petroleum Engineer International", September 1987, 32 - 40 und "World Oil", November 1983, 93 - 97.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen. Art und Menge dieser basischen Komponenten sind dabei in bekannter Weise so gewählt und aufeinander abgestimmt, daß die Bohrlochbehandlungsmittel auf einen pH-Wert im Bereich von etwa neutral bis mäßig-basisch, insbesondere auf den Bereich von etwa 7,5 bis 11 eingestellt sind.

Die Menge der jeweils eingesetzten Hilfs- und Zusatzstoffe bewegt sich grundsätzlich im üblichen Rahmen und kann damit der zitierten einschlägigen Literatur entnommen werden.

### Beispiele

In den nachfolgenden Beispielen 1 und 2 werden unter Einhaltung einer Standardrezeptur für Öl-basierte Bohrspülsysteme vom W/O-Typ entsprechende Bohrspülsysteme zusammengestellt, wobei die geschlossene Öl-phase jeweils durch einen ausgewählten oleophilen Carbonsäureester der nachfolgenden Definition gebildet ist:

Estergemisch aus im wesentlichen gesättigten Fettsäuren auf Basis Palmkern und 2-Ethylhexanol, das zum weitaus überwiegenden Teil auf C_{12/14}-Fettsäuren zurückgeht und der folgenden Spezifikation entspricht:
C₈: 3,5 bis 4,5 Gew.-%
C₁₀: 3,5 bis 4,5 Gew.-%
C₁₂: 65 bis 70 Gew.-%
C₁₄: 20 bis 24 Gew.-%
C₁₆: ca. 2 Gew.-%
C₁₈: 0,3 bis 1 Gew.-%
Das Estergemisch liegt als hellgelbe Flüssigkeit mit einem Flammpunkt oberhalb 165 °C und einer Viskosität (Brookfield 20 °C) von 7 bis 9 cp vor.

Am ungealterten und am gealterten Material werden die Viskositätskennwerte wie folgt bestimmt:
Messung der Viskosität bei 50 °C in einem Fann-35-Viskosimeter der Fa. Baroid Drilling Fluids Inc.. Es werden in an sich bekannter Weise bestimmt die Plastische Viskosität (PV), die Fließgrenze (YP) sowie die Gelstärke (lb/100 ft²) nach 10 sec. und 10 min . Bestimmt wird in Beispiel 1 weiterhin der fluid loss-Wert (HTHP).

Die Alterung der jeweiligen Bohrspülung wird durch Behandlung für den Zeitraum von 16 h bei 125 °C im Autoklaven - im sogenannten Rolleroven - vorgenommen.

Die Bohrspülungssysteme werden gemäß der folgenden Grundrezeptur in an sich bekannter Weise zusammengestellt:
230 ml Carbonsäureester-Öl
26 ml Wasser
6 g organophiler Bentonit (GELTONE der Fa. Baroid Drilling Fluids Inc.)
12 g organophiler Lignit (DURATONE der Fa. Baroid Drilling Fluids Inc.)
2 g Kalk
6 g Emulgator auf Di-Salz-Basis
3 g Co-Emulgator auf Basis C₁₈-Fettsäure - eingesetzt nur im Beispiel 2
346 g Baryt
9,2 g CaCl₂ x 2 H₂O
Der Emulgator auf Di-Salz-Basis wird als C₁₆₋₁₈-Sulfofettsäure-Di-Natriumsalz eingebracht, wandelt sich jedoch bei der Aufbereitung des Bohrspülungssystems beim Zusatz von Calciumchlorid in das entsprechende Calciumsalz um.

In den nachfolgenden Tabellen zu den Beispielen 1 und 2 sind die am ungealterten und am gealterten Material bestimmten Kennzahlen zusammenfassend dargestellt.

| Beispiel 1 | | |
|---|---|---|
| | Ungealtertes Material | Gealtertes Material |
| Plastische Viskosität (PV) | 37 | 34 |
| Fließgrenze (YP) | 19 | 19 |

| Gelstärke (lb/100 ft²) | | |
|---|---|---|
| 10 sec. | 10 | 12 |
| 10 min. | 22 | 28 |
| HTHP 5 ml | | |

| Beispiel 2 | | |
|---|---|---|
| | Ungealtertes Material | Gealtertes Material |
| Plastische Viskosität (PV) | 39 | 40 |
| Fließgrenze (YP) | 17 | 13 |

| Gelstärke (lb/100 ft²) | | |
|---|---|---|
| 10 sec. | 10 | 7 |
| 10 min. | 16 | 13 |

## Patentansprüche

1. Verwendung oberflächenaktiver Alpha-Sulfofettsäure-Di-Salze (Di-Salze) als ökologisch verträgliche Emulgatoren vom W/O-Typ bzw. O/W-Typ in fließ- und pumpfähigen Bohrspülungen oder anderen fließfähigen Bohrlochbehandlungsmitteln, die zusammen mit einer wäßrigen Phase eine geschlossene oder disperse Ölphase mit erhöhter Umweltvertraglichkeit und insbesondere biologischer Abbaubarkeit aufweisen und für die umweltschonende Erschließung biologischer Lagerstätten, beispielsweise von Erdöl- bzw. Erdgasvorkommen geeignet sind.

2. Ausführungsform nach Anspruch 1, dadurch gekennzeichnet, daß Di-Salze der Formel
R-CH(SO₃M)-CO₂M (I)
verwendet werden, in der
R lineares und/oder verzweigtes Alkyl mit wenigstens 4 C-Atomen, vorzugsweise mit 6 bis 22 C-Atomen und M gleiche oder verschiedene Kationen von Alkali, Erdalkali (M/2) und/oder Aluminium (M/3) bedeuten.

3. Ausführungsform nach Ansprüchen 1 und 2, dadurch gekennzeichnet, daß für die Stabilisierung von W/O-Emulsionen mit geschlossener Ölphase Di-Salze, insbesondere solche des Calciums und/oder des Magnesiums eingesetzt werden, die wenigstens anteilsweise und vorzugsweise überwiegend Reste R aus der allgemeinen Formel (I) mit wenigstens 10 C-Atomen, vorzugsweise mit 10 bis 16 C-Atomen aufweisen, während für die Stabilisierung von O/W-Emulsionen mit geschlossener wäßriger Phase der Einsatz von Alkalimetall-Di-Salzen, insbesondere von Natrium-Di-Salzen bevorzugt ist.

4. Ausführungsform nach Ansprüchen 1 bis 3, dadurch gekennzeichnet, daß die Di-Salze den wenigstens überwiegenden Emulgatoranteil bilden, dabei aber auch zusammen mit anderen, insbesondere biologisch verträglichen W/O- bzw. O/W-Emulgatoren eingesetzt werden können, wobei insbesondere die entsprechenden Salze nicht-sulfonierter Fettsäuren als Co-Emulgatoren mitverwendet werden können.

5. Ausführungsform nach Ansprüchen 1 bis 4, dadurch gekennzeichnet, daß Di-Salze in Mengen von 0,1 bis 10 Gew.-%, vorzugsweise von 0,5 bis 5 Gew.-% und insbesondere in Mengen von etwa 1 bis 3 Gew.-% - Gew.-% jeweils bezogen auf die Summe von Wasser und Öl - eingesetzt werden.

6. Ausführungsform nach Ansprüchen 1 bis 5, dadurch gekennzeichnet, daß die Emulgatoren auf Di-Salzbasis zusammen mit ökologisch verträglichen Ölphasen zum Einsatz kommen, wobei hier Esteröle von Monocarbonsäuren und/oder Polycarbonsäuren mit 1- und/oder mehrfunktionellen Alkoholen, entsprechende Esteröle der Kohlensäure, oleophile Alkohole und/oder entsprechende Ether bevorzugte Ölphasen sind und dabei insbesondere derart ausgewählt werden, daß im praktischen Einsatz auch unter partieller Esterverseifung keine toxikologischen, insbesondere keine inhalationstoxikologischen Gefährdungen ausgelöst werden.

7. Ausführungsform nach Ansprüchen 1 bis 6, dadurch gekennzeichnet, daß die Di-Salze zusammen mit Ölphasen bzw. Ölmischphasen eingesetzt werden, die Flammpunkte von wenigstens etwa 100 °C, vorzugsweise oberhalb etwa 135 °C aufweisen.

8. Ausführungsform nach Ansprüchen 1 bis 7, dadurch gekennzeichnet, daß die Emulgatoren auf Di-Salzbasis in fließ- und pumpfähigen Invert-Systemen mit geschlossener Ölphase zum Einsatz kommen, die Erstarrungswerte (Fließ- und Stockpunkt) unterhalb 0 °C, vorzugsweise unterhalb - 5 °C aufweisen und dabei im Temperaturbereich von 0 bis 5 °C eine Brookfield(RVT)-Viskosität nicht über 55 mPas, vorzugsweise nicht über 45 mPas besitzen, während beim Einsatz der Emulgatoren in O/W-Emulsionen die disperse Ölphase bei 20 °C eine Brookfield(RVT)-Viskosität bis etwa 3 Mio. mPas, vorzugsweise bis etwa 1 Mio. mPas besitzen kann.

9. Ausführungsform nach Ansprüchen 1 bis 8, dadurch gekennzeichnet, daß ökologisch unbedenkliche Di-Salz-Emulgatoren vom W/O-Typ zusammen mit einer Ölphase zum Einsatz kommen, die wenigstens anteilsweise Esteröle von Monocarbonsäuren aus wenigstens einer der nachfolgenden Unterklassen enthält:
a) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und 1- und/oder mehrfunktionellen Alkoholen der unter a) genannten Art,
c) Ester olefinisch 1 - und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

10. Invert-Bohrspülungen, die für eine umweltfreundliche Erschließung von geologischen Vorkommen geeignet sind und in einer geschlossenen Ölphase eine disperse wäßrige Phase zusammen mit Emulgatoren und üblichen weiteren Hilfsstoffen, beispielsweise Verdikkungsmitteln, fluid-loss-Additiven, Beschwerungsmitteln, wasserlöslichen Salzen und Alkalireserven enthalten, dadurch gekennzeichnet, daß sie zusammen mit einer ökologisch verträglichen geschlossenen Ölphase oberflächenaktive Di-Salze der allgemeinen Formel (I) insbesondere vom W/O-Typ als Emulgator bzw. Emulgatorbestandteil enthalten.

11. Invert-Bohrspülungen nach Anspruch 10, dadurch gekennzeichnet, daß sie als ökologisch verträgliche geschlossene Ölphase Esteröle, oleophile Alkohole und/oder entsprechender Ether enthält.

12. Invert-Bohrspülungen nach Ansprüchen 10 und 11, dadurch gekennzeichnet, daß sie eine Plastische Viskosität (PV) im Bereich von etwa 10 bis 60 mPas und eine Fließgrenze (Yield Point YP) im Bereich von etwa 5 bis 40 lb/100 ft² - jeweils bestimmt bei 50 °C aufweisen.

13. Invert-Bohrspülungen nach Ansprüchen 10 bis 12, dadurch gekennzeichnet, daß bei der Mitverwendung von Esterölen in der geschlossenen Ölphase, insbesondere entsprechender Ester von Monocarbonsäuren, von Polycarbonsäuren und/oder der Kohlensäure, diese Esteröle wenigstens etwa ein Drittel, vorzugsweise aber den überwiegenden Anteil dieser ökologisch verträglichen Ölphase ausmachen.

14. Invert-Bohrspülungen nach Ansprüchen 10 bis 13, dadurch gekennzeichnet, daß ihr disperser Wasseranteil etwa 5 bis 50 Gew.-%, bevorzugt etwa 10 bis 30 Gew.-% ausmacht und insbesondere Salze von der Art CaCl₂ und/oder KCl gelöst enthält.

15. Invert-Bohrspülungen nach Ansprüchen 10 bis 14, dadurch gekennzeichnet, daß die Ölphase des Invert-Schlammes im Temperaturbereich von 0 bis 5 °C eine Brookfield(RVT)-Viskosität unterhalb 50 mPas, vorzugsweise nicht über 40 mPas aufweist.

## Claims

1. The use of surface-active α-sulfofatty acid disalts (disalts) as ecologically safe emulsifiers of the w/o type or o/w type in flowable and pumpable drilling muds or other well servicing fluids which, together with an aqueous phase, contain a continuous or disperse oil phase with increased ecological compatibility and, in particular, biodegradability and which are suitable for the ecologically safe development of biological deposits, for example oil and gas occurrences.

2. The use claimed in claim 1, characterized in that disalts corresponding to the following formula:
R-(CH(SO₃M)-CO₂M (I)
in which R is a linear and/or branched alkyl group containing at least 4 carbon atoms and preferably 6 to 22 carbon atoms and
M may be the same or different and represents cations of alkali metals, alkaline earth metals (M/2) and/or aluminium (M/3),
are used.

3. The use claimed in claims 1 and 2, characterized in that disalts, more particularly those of calcium and/or magnesium, which at least partly and, preferably, predominantly contain substituents R from general formula (I) with at least 10 carbon atoms and preferably 10 to 16 carbon atoms, are used to stabilize w/o emulsions with a continuous oil phase while alkali metal disalts, more particularly sodium disalts, are preferably used to stabilize o/w emulsions with a continuous aqueous phase.

4. The use claimed in claims 1 to 3, characterized in that the disalts form the at least predominant part of the emulsifier, but may also be used together with other, more particularly biologically safe, w/o or o/w emulsifiers, in which case the purpose the corresponding salts of non-sulfonated fatty acids are particularly suitable as co-emulsifiers.

5. The use claimed in claims 1 to 4, characterized in that the disalts are used in quantities of 0.1 to 10% by weight, preferably in quantities of 0.5 to 5% by weight and more preferably in quantities of around 1 to 3% by weight - % by weight based on the sum of water and oil.

6. The use claimed in claims 1 to 5, characterized in that the emulsifiers based on disalts are used together with ecologically safe oil phases, preferred oil phases being ester oils of monocarboxylic acids and/or polycarboxylic acids with monohydric and/or polyhydric alcohols, corresponding ester oils of carbonic acid, oleophilic alcohols and/or corresponding ethers and being selected in particular so that no toxicological risks, above all no inhalation-toxicological risks, are encountered in practical applications, even in the event of partial ester saponification.

7. The use claimed in claims 1 to 6, characterized in that the disalts are used together with oil phases or mixed oil phases with flash points of at least about 100°C and preferably above about 135°C.

8. The use claimed in claims 1 to 7, characterized in that the emulsifiers based on disalts are used in flowable and pumpable invert systems with a continuous oil phase which have solidification values (flow point and pour point) below 0°C and preferably below -5°C and a Brookfield (RVT) viscosity at 0 to 5°C of not more than 55 mPa.s and preferably not more than 45 mPa.s, whereas in cases where the emulsifiers are used in o/w emulsions the disperse oil phase may have a Brookfield (RVT) viscosity at 20°C of up to about 3 million mPa.s and preferably up to about 1 million mPa.s.

9. The use claimed in claims 1 to 8, characterized in that ecologically safe disalt emulsifiers of the w/o type are used together with an oil phase which at least partly contains ester oils of monocarboxylic acids from at least one of the following subclasses:
a) esters of C₁₋₅ monocarboxylic acids and monohydric and/or polyhydric alcohols, moieties of monohydric alcohols containing at least 6 and preferably at least 8 carbon atoms and the polyhydric alcohols preferably containing 2 to 6 carbon atoms in the molecule,
b) esters of monocarboxylic acids of synthetic and/or natural origin containing 6 to 16 carbon atoms, more particularly esters of corresponding aliphatically saturated monocarboxylic acids and monohydric and/or polyhydric alcohols of the type mentioned in a),
c) esters of monoolefinically and/or polyolefinically unsaturated monocarboxylic acids containing at least 16 and, more particularly, 16 to 24 carbon atoms, more especially monohydric linear and/or branched alcohols.

10. Invert drilling muds which are suitable for the ecologically safe development of geological occurrences and which, in a continuous oil phase, contain a disperse aqueous phase together with emulsifiers and other typical auxiliaries, for example thickeners, fluid loss additives, weighting agents, water-soluble salts and alkali reserves, characterized in that they contain surface-active disalts corresponding to general formula (I), more particularly of the w/o type, together with an ecologically safe continuous oil phase as emulsifier or as an emulsifier component.

11. Invert drilling muds as claimed in claim 10, characterized in that they contain ester oils, oleophilic alcohols and/or corresponding ethers as the ecologically safe continuous oil phase.

12. Invert drilling muds as claimed in claims 10 and 11, characterized in that they have a plastic viscosity (PV) at 50°C in the range from about 10 to 60 mPa.s and a yield point (YP) at 50°C in the range from about 5 to 40 lb/100 ft².

13. Invert drilling muds as claimed in claims 10 to 12, characterized in that, where ester oils are also used in the continuous oil phase, more particularly corresponding esters of monocarboxylic acids, polycarboxylic acids and/or carbonic acid, the ester oils make up at least about one third, but preferably the predominant part of this ecologically oil phase.

14. Invert drilling muds as claimed in claims 10 to 13, characterized in that their disperse water content makes up about 5 to 50% by weight and preferably about 10 to 30% by weight and, in particular, contains dissolved salts of the CaCl₂ and/or KCl type.

15. Invert drilling muds as claimed in claims 10 to 14, characterized in that the oil phase of the invert mud has a Brookfield (RVT) viscosity at 0 to 5°C below 50 mPa.s and preferably of not more than 40 mPa.s.

## Revendications

1. Utilisation de disels d'acides gras alphasulfoniques tensioactifs (disels) comme émulsifiants biocompatibles du type eau dans l'huile ou huile dans l'eau dans des solutions de curage coulables et pompables ou dans d'autres agents de traitement de puits de forage pompables qui présentent, conjointement avec une phase aqueuse, une phase huileuse fermée ou dispersée à biocompatibilité accrue et en particulier biodégradable et qui sont appropriés à l'exploitation ménageant l'environnement de gisements biologiques, par exemple de gisements de pétrole ou de gaz naturel.

2. Forme de réalisation selon la revendication 1, caractérisée en ce que sont utilisés des disels de la formule
R-CH(SO₃M)-CO₂M (I)
dans laquelle R représente un alkyle linéaire et/ou ramifié comportant au moins 4 atomes de C, de préférence 6 à 22 atomes de C, tandis que M correspond à des cations identiques ou différents de métaux alcalins, alcalino-terreux (M/2) et/ou d'aluminium (M/3).

3. Forme de réalisation selon les revendications 1 et 2, caractérisée en ce que sont mis en oeuvre pour la stabilisation des émulsions eau dans l'huile à phase huileuse fermée, des disels, en particulier ceux du calcium et/ou du magnésium, qui présentent au moins en partie et de préférence, principalement, des radicaux R de la formule générale (I) comportant au moins 10 atomes de C, de préférence 10 à 16 atomes de C, tandis que l'utilisation de disels de métaux alcalins, en particulier de disels de sodium est préférée pour la stabilisation des émulsions huile dans l'eau.

4. Forme de réalisation selon les revendications 1 à 3, caractérisée en ce que les disels forment la fraction d'émulsifiant au moins la plus importante, mais peuvent également être mis en oeuvre conjointement avec d'autres émulsifiants, en particulier avec des émulsifiants eau dans l'huile ou huile dans l'eau biocompatibles, les sels correspondants d'acides gras non sulfonés pouvant être co-utilisés en particulier comme co-émulsifiants.

5. Forme de réalisation selon les revendications 1 à 4, caractérisée en ce que les disels sont mis en oeuvre en proportions de 0,1 à 10 % en poids, de préférence de 0,5 à 5 % en poids et, en particulier, en proportions d'environ 1 à 3 % en poids, dans chaque cas par rapport à la somme de l'eau et de l'huile.

6. Forme de réalisation selon les revendications 1 à 5, caractérisée en ce que les émulsifiants à base de disels sont mis en oeuvre conjointement avec des phases huileuses biocompatibles, auquel cas des huiles-esters d'acides monocarboxyliques et/ou polycarboxyliques avec des mono- et/ou des polyalcools, des huiles-esters correspondantes de l'acide carbonique, des alcools oléophiles et/ou des éthers correspondants représentent des phases huileuses préférées et sont sélectionnées en l'espèce en particulier de manière telle que dans la mise en oeuvre pratique, il n'existe aucun risque de toxicité, en particulier de toxicité par inhalation, même sous saponification partielle d'ester.

7. Forme de réalisation selon les revendications 1 à 6, caractérisée en ce que les disels sont mis en oeuvre conjointement avec des phases huileuses ou des phases huileuses mixtes, qui présentent un point d'éclair d'au moins 100 °C, de préférence supérieur à environ 135 °C.

8. Forme de réalisation selon les revendications 1 à 7, caractérisée en ce que les émulsifiants à base de disels sont mis en oeuvre dans des systèmes inversés coulables et pompables à phase huileuse fermée, qui présentent des valeurs de solidification (point d'écoulement et point de congélation) inférieures à 0 °C, de préférence inférieures a - 5 °C et dont la viscosité selon Brookfield (RVT) ne dépasse pas 55 mPa.s, de préférence n'excède pas 45 mPa.s dans la plage de température de 0 à 5 °C, tandis qu'en cas d'utilisation des émulsifiants dans des émulsions huile dans l'eau, la phase huileuse dispersée peut posséder à 20 °C une viscosité selon Brookfield (RVT) jusqu'à environ 3 millions de mPa.s, de préférence jusqu'à environ 1 million de mPa.s.

9. Forme de réalisation selon les revendications 1 à 8, caractérisée en ce que les émulsifiants à base de disels inoffensifs pour l'environnement du type eau dans l'huile sont mis en oeuvre conjointement avec une phase huileuse, qui renferme au moins en partie des huiles-esters d'acides monocarboxyliques appartenant à au moins une des sous-classes ci-après:
a) esters d'acides monocarboxyliques en C₁₋₅ et de mono- et/ou de polyalcools, les radicaux de monoalcools présentant au moins 6, de préférence au moins 8 atomes de C, et les polyalcools renfermant de préférence 2 à 6 atomes de C par molécule,
b) esters d'acides monocarboxyliques d'origine synthétique et/ou naturelle comportant 6 à 16 atomes de C, en particulier esters d'acides monocarboxyliques à saturation aliphatique correspondants et de mono- et/ou de polyalcools du type cité sous a),
c) esters d'acides monocarboxyliques à mono- et/ou à polyinsaturation oléfinique comportant au moins 16, en particulier 16 à 24 atomes de C et, en particulier de monoalcools à chaîne droite et/ou ramifiée.

10. Solutions de curage inversées, qui sont appropriées à l'exploitation non polluante des gisements géologiques et qui renferment dans une phase huileuse fermée une phase aqueuse dispersée, conjointement avec des émulsifiants et d'autres adjuvants usuels, tels qu'épaississants, additifs "fluid-loss", alourdissants, sels solubles dans l'eau et réserves d'alcalis, caractérisées en ce qu'elles contiennent conjointement avec une phase huileuse fermée biocompatible des disels tensioactifs de la formule générale (I), en particulier du type eau dans l'huile, comme émulsifiant ou composant émulsifiant.

11. Solutions de curage inversées selon la revendication 10, caractérisées en ce qu'elles renferment comme phase huileuse fermée biocompatible, des huiles-esters, des alcools oléophiles et/ou des éthers correspondants.

12. Solutions de curage inversées selon les revendications 10 et 11, caractérisées en ce qu'elles présentent une viscosité plastique (PV) se situant dans l'intervalle d'environ 10 à 60 mPa.s et une limite d'écoulement (Yield Point YP) comprise dans la plage d'environ 5 à 40 lb/100 ft² - déterminées dans chaque cas à 50 °C.

13. Solutions de curage inversées selon les revendications 10 à 12, caractérisées en ce qu'en cas de co-utilisation d'huiles-esters dans la phase huileuse fermée, en particulier d'esters correspondants d'acides monocarboxyliques, d'acides polycarboxyliques et/ou de l'acide carbonique, lesdites huiles-esters représentent environ un tiers, mais de préférence la majeure partie de cette phase huileuse biocompatible.

14. Solutions de curage inversées selon les revendications 10 à 13, caractérisées en ce que leur fraction d'eau dispersée représente environ 5 à 50 % en poids, de préférence environ 10 à 30 % en poids et renferme en particulier des sels du type du CaCl₂ et/ou du KCl.

15. Solutions de curage inversées selon les revendications 10 à 14, caractérisées en ce que la phase huileuse de la boue inversée présente une viscosité selon Brookfield (RVT) inférieure à 50 mPa.s, de préférence inférieure à 40 mPa.s, dans la plage de température de 0 à 5 °C.
